## Europäisches Patentamt
## European Patent Office
## Office européen des brevets

(19)

(11) Numéro de publication: **0 082 048**
**B1**

(12) **FASCICULE DE BREVET EUROPÉEN**

(45) Date de publication du fascicule du brevet:
05.11.86

(51) Int. Cl.⁴: **F 15 B 13/04,** F 15 B 11/05

(21) Numéro de dépôt: **82402201.6**

(22) Date de dépôt: **02.12.82**

(54) **Distributeur hydraulique.**

(30) Priorité: **03.12.81 FR 8122670**

(43) Date de publication de la demande:
**22.06.83 Bulletin 83/25**

(45) Mention de la délivrance du brevet:
**05.11.86 Bulletin 86/45**

(84) Etats contractants désignés:
**DE GB IT SE**

(56) Documents cité:
**DE-A-2 159 766**
**DE-A-2 943 316**
**FR-A-1 472 167**
**FR-A-2 054 624**
**FR-A-2 080 402**
**US-A-3 742 982**
**US-A-4 145 958**

(73) Titulaire: **REXROTH- SIGMA, 91 boulevard Irène-Joliot- Curie, F-69634 Vénissieux Cedex (FR)**

(72) Inventeur: **Isaac, Olivier, 5, quai Général Sarrail, F-69006 Lyon (FR)**
Inventeur: **Pignolet, Louis, 54, boulevard de la Croix Rousse, F-69004 Lyon (FR)**

(74) Mandataire: **Michardière, Bernard, Cabinet Plasseraud 84, rue d'Amsterdam, F-75009 Paris (FR)**

EP 0 082 048 B1

LIBER, STOCKHOLM 1986

## Description

L'invention est relative à un distributeur hydraulique tel que défini dans le préambule de la revendication 1.

Un distributeur de ce type est décrit dans la demande de brevet DE-A- 2 943 316.

Dans certains montages hydrauliques, notamment lorsque l'on souhaite piloter une pompe à cylindrée variable à la puissance absorbée par l'appareil hydraulique commandé par le distributeur, il convient de disposer d'une pression de pilotage égale à la plus forte des pressions présente aux orifices de raccordement du ou de plusieurs distributeurs utilisés en groupe.

Le distributeur décrit dans le document DE-A- 2 943 316 ne permet pas de disposer d'une telle pression de pilotage.

La demande de brevet DE-A- 2 159 766 et le brevet US-A-3 742 982 décrivent des circuits hydrauliques agencés pour assurer la commande d'une pompe hydraulique à débit réglable en fonction des besoins de la charge.

Toutefois les agencements décrits dans ces deux documents nécessitent l'établissement de liaisons hydrauliques externes et ne peuvent en aucun cas conduire à la constitution de distributeurs juxtaposés pour constituer un bloc fonctionnel de commande, comme cela se fait couramment actuellement et agencés de manière que, au sein de ce bloc, leurs liaisons hydrauliques mutuelles soient assurées, sans circuits extérieurs simplement par la mise en regard d'orifices appropriés prévus dans les faces coopérantes de distributeurs voisins.

Il est souhaitable, en outre, que les moyens de déverrouillage du tiroir dans ses positions de travail interviennent lorsque la plus forte des pressions présentes aux orifices de raccordement devient trop élevée. Or aucun des distributeurs décrits dans les documents précités n'est agencé, ou susceptible d'être agencé dans ce but.

L'invention a pour but, surtout, de fournir un distributeur hydraulique du genre défini précédemment qui permette de satisfaire aux deux exigences évoquées ci-dessus tout en restant d'une fabrication simple et robuste, tout en conservant un encombrement réduit et tout en autorisant la constitution du distributeur sous une forme telle qu'il soit permis de réaliser des blocs modulaires par simple juxtaposition de tels distributeurs.

Selon l'invention un distributeur hydraulique du genre en question est caractérisé comme indiqué dans la partie caractéristique de la revendication 1.

Les moyens sensibles à la pression peuvent comprendre un piston ou analogue logé dans une chambre et propre à agir sur le deverrouillage sous l'effet de la pression de sortie du sélecteur, et un système de canalisation propres à relier la chambre du sélecteur à la chambre où se trouve le piston.

Ce système de canalisation est avantageusement réalisé à l'aide d'une pièce emmanchée, notamment à force, dans un alésage de la partie du tiroir comportant la chambre, cette pièce comportant une tête élargie située dans cette chambre, le siège pour la bille du sélecteur étant prévu sur cette tête, le diamètre extérieur de ladite tête étant inférieur au diamètre interieur de la chambre du sélecteur de telle sorte qu'un passage annulaire soit formé entre la tête et la surface intérieure de la chambre, ce passage annulaire étant relié par un espace, prévu entre un prolongement de la pièce et l'alésage du tiroir dans lequel ce prolongement est engagé, à la chambre dans laquelle se trouve le piston de déverrouillage; le siège prévu dans la tête élargie de la pièce est relié par des canalisations prévues dans cette pièce et sur sa surface externe, avec un canal radial du tiroir propre à être mis en communication avec un orifice de sortie ou un orifice de raccordement du distributeur.

Le distributeur peut comprendre un clapet d'étanchéité prévu sur un orifice de sortie, clapet dont l'ouverture peut être commandée par le tiroir lors de ses déplacements; ce tiroir comporte alors avantageusement un passage transversal diamétral communiquant avec un canal longitudinal du tiroir, l'ensemble étant tel que, en position neutre du tiroir, ce passage diamétral établisse une liaison de la chambre du corps de distributeur, fermée par le clapet d'étanchéité, avec l'orifice relié au réservoir, tandis que lors du déplacement du tiroir dans le sens destiné à provoquer l'ouverture du clapet d'étanchéité, le susdit passage diamétral se trouve fermé au début du mouvement.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, est une coupe axiale partielle, au niveau du tiroir, d'un distributeur conforme à l'invention.

La figure 2 est une section suivant II-II, fig. 1.

La figure 3 est une coupe longitudinale, avec parties en extérieur, d'un distributeur comportant un clapet d'étanchéité sur un de ses orifices de raccordement.

La figure 4 est un schéma de distribution avec trois distributeurs conformes à l'invention alimentés en fluide sous pression par une pompe à cylindrée variable, avec pilotage de la cylindrée de la pompe.

La figure 5, enfin, est un schéma de distribution avec trois distributeurs alimentés par une pompe à cylindrée fixe avec pilotage du limiteur de pression de la pompe.

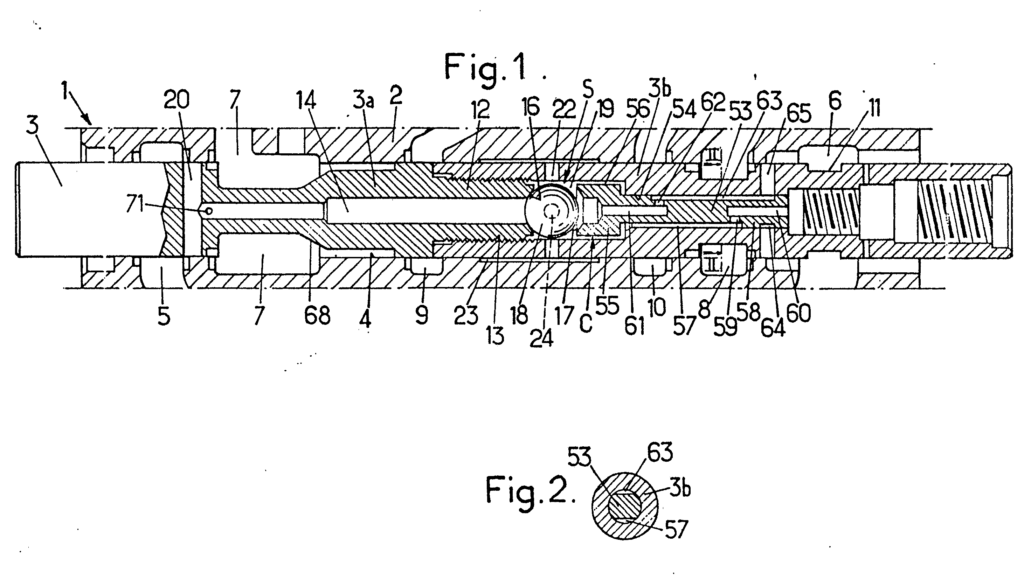

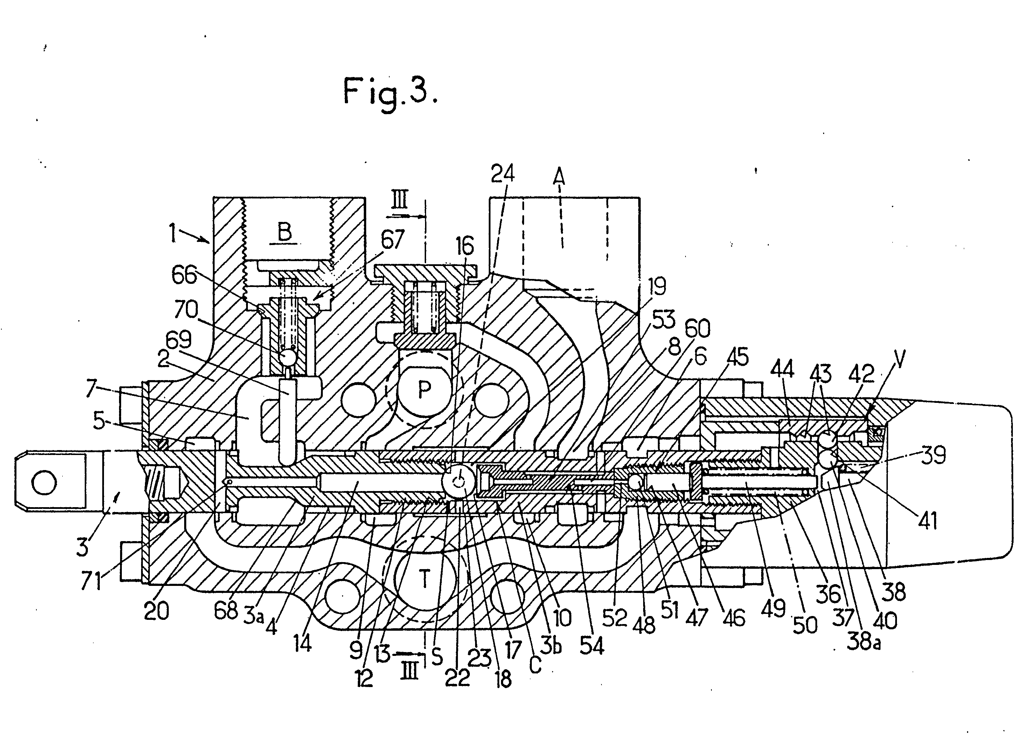

En se reportant aux dessins, notamment aux figures 1 et 3, on peut voir un distributeur hydraulique 1 comprenant un corps 2 muni, au moins, d'un orifice P (fig. 3) d'admission de fluide sous pression, d'un orifice T de retour de fluide vers un réservoir et de deux orifices de raccordement A, B à un appareil ou composant hydraulique tel qu'un vérin ou un moteur rotatif.

Le distributeur comporte également un tiroir 3 propre à coulisser dans un alésage 4 du corps de distribu sur les figures 1 et 3. On peut, cependant, préciser que le corps 2 comporte vers chacune de ses extrémités longitudinales, une cavité 5, 6, reliée à l'orifice T comme visible sur la figure 3; les cavités 5 et 6 sont traversées par l'alésage 4. Deux cavités 7 et 8 reliées respectivement aux orifices de raccordement B et A sont prévues entre les cavités 5 et 6 et la région médiane du corps 2. Deux autres cavités g et 10 sont prévues, dans le corps 2, entre les cavités 7 et 8 et la région médiane de ce corps; les cavités 9 et 10 sont reliées par des canalisations à l'orifice P.

Les cavités 7, 8, 9 et 10 sont traversées par l'alésage 4.

Le tiroir 3 est réalisé en deux parties 3a, 3b assemblées rigidement l'une à l'autre, et un sélecteur de pression 8 est disposé à l'intérieur du tircir. Les deux parties 3a, 3b, sont vissées l'une dans l'autre, la partie 3a comportant un prolongement 12 de plus faible diamètre, fileté extérieurement, vissé dans un logement taraudé 13 prévu dans l'autré partie 3b.

Après mise en place du sélecteur S à l'intérieur du tiroir, les deux parties 3a, 3b sont vissées et bloquées l'une dans l'autre et assemblées de manière définitive, notamment par collage. Un usinage de finition (rectification) est effectué sur le tiroir 3 ainsi assemblé, qui subit, ensuite, un chromage.

Chaque partie 3a, 3b comporte un canal axial longitudinal respectivement 14, 54 ayant une extrémité ouverte vers lautre partie du tiroir et agencée sous la forme d'un siège, notamment tronconique, respectivement 16, 17 pour une bille 18 appartenant au sélecteur. Le canal axial 54 de la partie 3b comporte au-delà de son siège 17, et vers la partie 3a, une zone élargie propre à servir de chambre 19 à la bille 18; le logement taraudé 13 prolonge cette chambre 19 vers la partie 3a. Le diamètre intérieur de la chambre 19 est supérieur au diamètre de la bille 18.

Les deux sièges 16, 17 constituent les deux entrées du sélecteur propres à étre reliées aux orifices de raccordement B et A respectivement par les canaux axiaux 14 et 61, 63, et par des canaux radiaux 20, 65 prévus à l'extrémité borgne de chaque canal axial et reliant ce canal axial à la périphérie du tiroir 3.

La sortie du sélecteur S comprend un ou plusieurs canaux radiaux tels que 22 reliant la chambre 19 à la surface extérieure du tiroir 3. Ces canaux 22 débouchent dans un dégagement cylindrique 23 prévu dans l'alésage du corps 2; ce dégagement 23 a une longueur au moins égale à la course du tiroir de manière à rester en communication permanente avec la sortie 22 du sélecteur 8.

Le dégagement cylindrique 23, et donc la sortie 22 du sélecteur 8, sont reliés à un canal 24 (fig. 1) débouchant à l'extérieur du corps de distributeur.

Le sélecteur S compare les pressions sur ses entrées 16, 17, c'est-à-dire les pressions sur les orifices de raccordement B et A lorsque la communication des canaux axiaux 14, 15 avec ces orifices est établie pour une position de travail du tiroir 3. La bille 18 est repoussée, par la pression la plus forte, contre le siège 16 ou 17 du canal relié à la plus faible pression, et vient fermer ce canal; la pression la plus forte est ainsi disponible à la sortie du sélecteur (chambre 19 et canal 22) et donc dans le dégagement 23. En position neutre du tiroir 3, la chambre 19 du sélecteur est reliée au réservoir par les canaux 20, 65 qui communiquent avec les cavités 5 et 6.

Le corps 2 de distributeur a une forme générale parallélépipédique dont les grands côtés sont parallèles à l'axe longitudinal du tiroir 3 ; ce corps 2 présente deux faces planes parallèles entre elles ainsi qu'à l'axe du tiroir 3; ces faces permettent un empilage de plusieurs distributeurs face plane contre face plane.

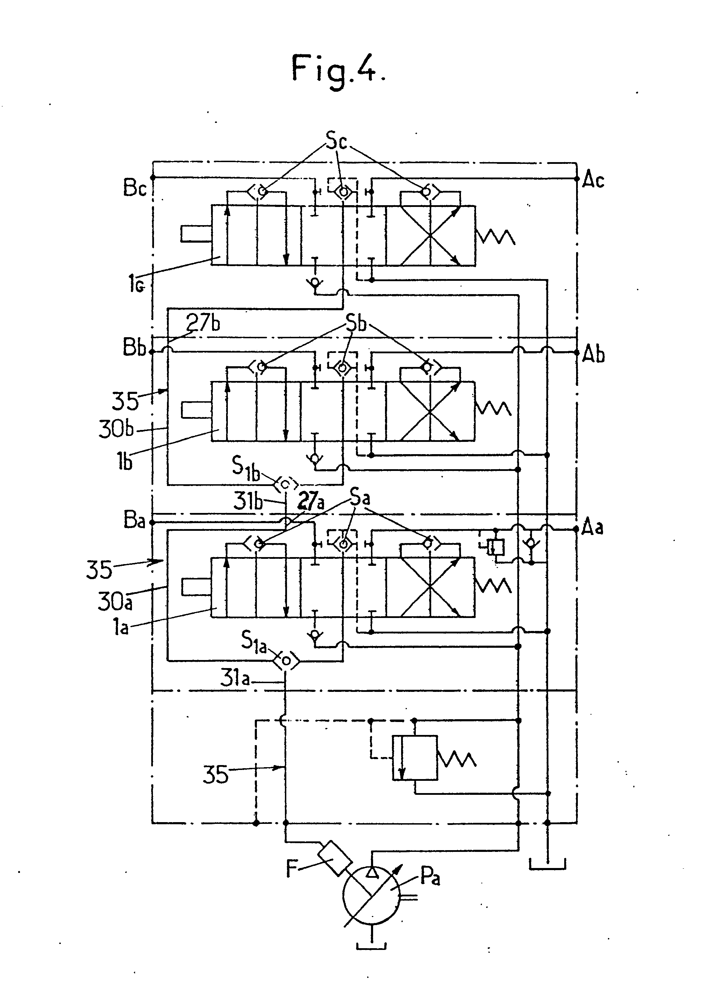

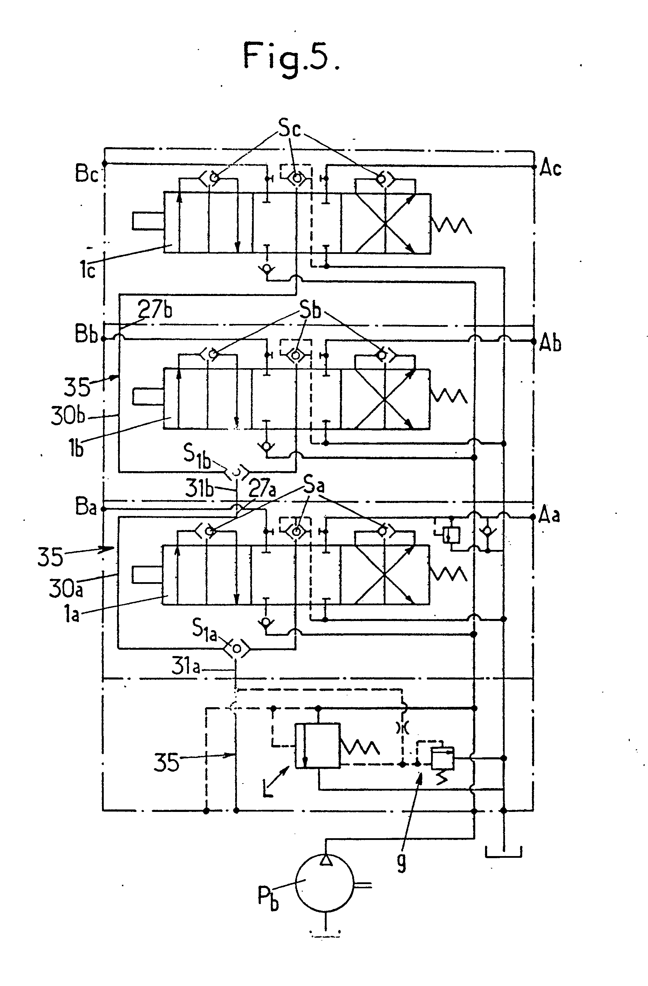

Dans le cas où plusieurs distributeurs tels que 1a, 1b, 1c (voir fig. 4 et 5) sont combinés on prévoit, en plus du premier sélecteur $S_a$, $S_b$, $S_c$ de chaque distributeur un deuxième sélecteur tel que $S_{1a}$, $S_{1b}$ associé à un distributeur 1a, 1b (fig. 4 et 5).

Le deuxième sélecteur, tel que $S_{1a}$ ou $S_{1b}$ (fig. 4) compare la pression de sortie du premier sélecteur $S_a$ ou $S_b$ d'un distributeur associé (1a ou 1b), avec une autre pression transmise par un passage tel que 27a ou 27b. Le deuxième sélecteur tel que $S_{1a}$ ou $S_{1b}$ fournit sur sa sortie et sur un orifice tel que 31a ou 31b (Fig. 4) la plus grande pression.

Le deuxième sélecteur tel que $S_{1a}$ ou $S_{1b}$ peut être situé soit à l'extérieur du corps de distributeur, soit dans le corps de distributeur.

La pression transmise par le passage 27a, 27b du deuxième sélecteur 31a, 31b peut être formée par la plus forte pression d'un ou de plusieurs autres distributeurs branchés sur une même source de pression constituée, par exemple, par une pompe à cylindrée variable.

Par empilage de plusieurs distributeurs, l'orifice 31b d'un distributeur 1b vient communiquer avec le passage 27a du distributeur voisin.

Le schéma de la figure 4 illustre un tel montage avec trois distributeurs 1a, 1b, 1c à trois positions, branchés en parallèle sur une pompe d'alimentation à cylindrée variable $P_a$. Divers composants hydrauliques classiques sont illustrés sur ce schéma et il n'apparaît pas nécessaire de les décrire en détail, leur représentation symbolique étant suffisante pour les identifier.

Les éléments ou parties de ces distributeurs semblables aux parties déjà décrites sont désignés par les mêmes références numériques suivies des indices a, b ou c; la description de ces parties ou éléments ne sera pas reprise.

On notera essentiellement la présence d'une ligne de pilotage 35 permettant de commander la cylindrée de la pompe $P_a$ en fonction de la pression la plus élevée demandée sur l'un des orifices de raccordement des trois distributeurs.

Cette ligne ou conduite de pression comprend des conduites 30a et 30b pour la et 1b. Elle relie la sortie du sélecteur $S_c$ (premier sélecteur du dernier distributeur 1c) à uné entrée de $S_{1b}$ (deuxième sélecteur du distributeur 1b). L'autre entrée de ce sélecteur $S_{1b}$ est reliée à la sortie du premier sélecteur $S_b$ de 1b.

La ligne 35 relie, ensuite, la sortie de $S_{1b}$ à une entrée du deuxième sélecteur $S_{1a}$ du premier distributeur 1a. L'autre entrée de $S_{1a}$ est reliée, comme expliqué précédemment, à la sortie du premier sélecteur $S_a$ du distributeur 1a.

La ligne 35 enfin, relie la sortie de $S_{1a}$ au dispositif de commande F de la cylindrée de la pompe.

On notera également que dans la réprésentation schématique, les premiers sélecteurs $S_a$, $S_b$ ou $S_c$ ont été représentés trois fois, en correspondance avec chaque case schématique du distributeur.

En se reportant à la figure 3, on voit que le distributeur 1 comporte un dispositif de verrouillage V du tiroir dans ses diverses positions. Ce dispositif de verrouillage V est classique et il n'est pas besoin de le décrire en détail. On notera simplement qu'une pièce 36 est vissée à une extrémité du tiroir 3; cette pièce comporte un logement axial 37 dans lequel peut coulisser une tige 38 munie d'une tête tronconique 38a et poussée par un ressort 39 vers le tiroir 3. La tête tronconique 38a coopère avec une bille 40 engagée dans un trou transversal 41 traversant la paroi du logement 37. Une deuxième bille 42, poussée par la bille 40, fait saillie sur la surface extérieure de la pièce 36 de manière à coopérer avec des gorges de verrouillage telles que 43 prévues à l'intérieur d'un manchon 44 bloqué sur le corps 2. Un déplacement de la tige 38, vers la droite selon la représentation de la figure 3, à l'encontre du ressort 39, permet l'effacement des billes 40 et 42 vers l'intérieur du logement 37, dans le sens radial, et le déverrouillage du tiroir 3. Cet effacement peut être obtenu mécaniquement par un opérateur en exerçant sur le tiroir 3 un effort axial suffisant pour provoquer un tel recul de la tige 38 sous l'influence de la poussée radiale exercée par les billes sur la tête tronconique.

Des moyens 45 sensibles à la pression de sortie du premier sélecteur S sont prévus pour commander la mise en action du déverrouillage lorsque la pression de sortie du sélecteur S franchit une limite déterminée. Ces moyens 45 comprennent un piston 46 logé dans une chambre 47 ménagée dans un manchon 48 vissé dans un trou taraudé du tiroir 3. par son extrémité éloignée du centre du distributeur, le piston 46 appuié contre la tête d'un poussoir 49 destiné à transmettre l'effort à la tige 38. Ce poussoir est maintenu par des moyens de rappel élastiques 50 au contact du piston 46. Pour la position totalement enfoncée du piston 46 dans la chambre 47, comme représenté sur la figure 3, le poussoir 49 est écarté de la tige 38.

Une bille 51 est disposée entre l'extrémité du piston 46 tournée vers le centre du distributeur et le fond de la chambre 47. Ce fond est traversé par un canal axial 52 de diamètre très inférieur à celui de la chambre 47. La bille 51 est propre à fermer ce canal sous l'effort des moyens élastiques 50, effort transmis par la tête du poussoir 49 au piston 46 et à la bille. Un système de canalisations C est prévu pour relier la sortie du sélecteur S au canal 52 et donc à la chambre 47.

Ce système de canalisations C, bien visible sur la figure 1, est réalisé à l'aide d'une pièce 53 emmanchéenotamment à force, dans l'alésage 54 de la partie 3b du tiroir comportant la chambre 19.

La pièce 53 comporte une tête 55 élargie, de plus fort diamètre que celui de la partie emmanchée dans l'alésage 54. Cetre tête 55 est située dans la chambre 19 dont la longueur axiale est supérieure à celle prévue dans le cas de la figure 1. Le diamètre extérieur de la tête 55 est inférieur au diamètre intérieur de la chambre 19 de telle sorte qu'un passage annulaire 56 soit formé entre la tête et cette surface intérieure. Ce passage annulaire 56 est relié à un espace 57, formant canal à section en segment de cercle (voir fig. 2); cet espace correspond à un dégagement à fond plat pratiqué sur la pièce cylindrique 53 (fig. 2).

Comme visible sur la figure 1, l'espace 57 ne s'étend que suivant une fraction de la longueur axiale de la pièce 53 et est fermé en 58 par le contour normal de cette pièce 53. Un trou transversal 59 est prévu pour relier l'espace 57 à un canal axial 60 qui s'ouvre sur l'extrémité de la pièce 53 tournée vers le manchon 48 et les moyens de verrouillage V (voir fig. 3). Ce canal 60 communique avec l'autre canal axial 52 comme visible sur la figure 3. La pression règnant dans la chambre 19 du sélecteur, et donc la pression à la sortie de ce sélecteur, est ainsi transmise au canal 52 et s'exerce sur une surface de la bille 51, correspondant à la section du canal 52, à l'encontre de l'effort développé par le ressort 50. Lorsque cette pression dépasse une valeur prédéterminée, la bille 51 est écartée de son siège et la pression de liquide s'établit sur toute la section de la chambre 47; du fait que la section de cette chambre 47 est largement supérieure à la section du canal 52, la force qui s'exerce sur le piston 46 devient largement supérieure à celle qui a provoqué le décollement de la bille 51 de son siège et on obtient un déplacement franc du piston 46 à l'encontre du ressort 50. Le poussoir 49 repousse la tige 38 et sa tête tronconique 38a à l'encontre du ressort 39 et les billes 40, 42 s'effacent vers l'intérieur dans le sens radial, ce qui déverrouille le tiroir 3 lequel est ramené par des moyens élastiques (non visibles sur la figure 3), dans sa position neutre.

Le siège 17 de la bille 18 du sélecteur S (voir fig. 1) qui est prévu à l'extrémité de la tête élargie 55 comme indiqué précédemment, est prolongé vers l'intérieur de la pièce 53 par le canal axial borgne 61. Vers son extrémité fermée, ce canal 61 communique par un trou radial 62 avec l'espace 63 (voir fig. 1 et 2) à section transversale en forme de segment de cercie. L'espace 63, semblable à l'espace 57 décrit précédemment, s'étend suivant une fraction de la longueur de la pièce 53, à la périphérie de cette dernière. Cet espace 63 est formé par un dégagement à fond plat pratiqué sur la pièce 53 et est limité par la surface intérieure de l'alésage 54. Une gorge périphérique 64 est prévue sur la pièce 53 au niveau de l'extrémité longitudinale, éloignée du centre du tiroir 3, de l'espace 63. A ce même niveau longitudinal sont prévus, dans la paroi de la partie 3b du tiroir des canaux radiaux 65 faisant communiquer la gorge 64 et l'espace 63 avec la ssurface extérieure du tiroir 3. La position longitudinale des gorges du tiroir, 3 et des canaux radiaux 65 est choisie de manière à assurer les connexions suivantes. Lorsque le tiroir 3 occupe la position de travail assurant la liaison entre les cavités 8 et 10 par une des gorges dudit tiroir, les canaux 65 débouchent dans la cavité 8 et assurent donc la mise en communication du siège 17 avec la chambre 8. Lorsque le tiroir 3 occupe son autre position de travail pour laquelle une de ses gorges met en communication la cavité 8 avec la cavité 6, les canaux radiaux 65 débouchent dans la cavité 6. En position neutre du tiroir 3, pour laquelle la cavité 8 est isolée des cavités 10 et 6, les canaux radiaux 65 débouchent dans la cavité 6 et assurent donc la liaison du siège 17 avec l'orifice T et le réservoir.

Le fonctionnement du déverrouillage du distributeur conforme aux figures 1 et 3 résulte immédiatement des explications précédentes.

Lorsque le tiroir 3 occupe une position de travail (déplacée vers la gauche par rapport à celle représentée sur la fig. 1), assurant l'admission du fluide sous pression dans la cavité 8 et vers l'orifice A, ce fluide sous pression passe par les canaux 65, l'espace 63, le trou 62 et le canal 61 pour arriver contre la bille 8. Comme l'autre orifice de raccordement B se trouve alors, relié à l'orifice T deretour au réservoir, la bille 18 du sélecteur S se trouve poussée par la pression contre l'autre siège 16 qui est ainsi fermé.

La pression de liquide s'établit donc dans la chambre 19 que l'on peut considérer comme formant, avec les orifices 22, la sortie du sélecteur S. Ce liquide sous pression s'écoule par le passage 56, l'espace 57, le trou 59 et le canal 60, vers la bille 51 (fig. 3).

Lorsque la pression du liquide dépasse une valeur prédéterminée, comme expliqué précédemment, la bille 51 est écartée de son siège et le piston 46 commande le déverrouillage du tiroir 3.

En se reportant de nouveau à la figure 3, on voit que le distributeur 1 peut comprendre un clapet d'étanchéité 67 prévu sur l'orifice de sortie B, muni d'un siège 66, clapet dont l'ouverture peut être commandée par une partie tronconique 68 du tiroir 3 lors de son déplacement, cette partie tronconique coopérant avec une tige de poussée 69 propre à déplacer une bille 70 soumise à un effort relativement réduit du fait de la faible section sur laquelle s'exerce la différence de pression. Le déplacement de la bille 70 permet l'équilibrage de pression de part et d'autre du clapet 67 et l'ouverture ultérieure de ce clapet avec un effort réduit.

Lorsqu'un tel clapet 67 est combiné avec un distributeur conforme à l'invention, on prévoit avantageusement, dans le tiroir 3, un passage diamétral 71 qui communique avec le canal axial 14 de la partie 3a vers l'extrémité borgne de ce canal 14. Le passage 71 est situé du côté de la partie centrale du tiroir 3 par rapport au canal radial 20.

La position longitudinale de ce passage diamétral 71 est choisie de telle sorte que lorsque le tiroir 3 est en position neutre, pour laquelle les gorges prévues à la périphérie du tiroir n'établissent pas de liaison entre la cavité 7 et la cavité 5 reliée à l'orifice T, le passage 71 communique avec cette cavité 7, tandis que le canal radial 20 communique avec la cavité 5. On voit ainsi qu'une liaison est établie entre la cavité 7 et l'orifice T par l'intermédiaire du passage 71, du canal 20 et de la cavité 5.

Cette liaison permet de décomprimer la cavité 7 au cas où des fuites se produiraient entre le tiroir 3 et l'alésage 4, depuis la cavité 9 sous pression vers la cavité 7.

La position du passage 71 est, en outre, choisie de telle sorte que lors du déplacement du tiroir 3 dans le sens destiné à provoquer l'ouverture du clapet 67, c'est-à-dire lors du déplacement du tiroir 3 vers la gauche dans le cas de la figure 3, le susdit passage 71 se trouve fermé par une portée de l'alésage du corps de distributeur pendant que la tige 69 est soulevée par la partie tronconique 68. La cavité 7 est ainsi isolée de l'orifice T et la pression dans cette cavité 7 peut augmenter lorsque la bille 70 est décollée de son siège, jusqu'à équilibrer la pression à l'orifice B, puisqu'il n'y a pas d'écoulement de fuite par le passage 71. Un tel écoulement provoquerait une perte de charge à travers le clapet 67 et rendrait plus difficile l'ouverture de ce clapet.

Lorsque le déplacement du tiroir se poursuit vers la gauche de la figure 3, le passage 71 entre ensuite en communication avec la cavité 5, mais alors le clapet 67 est déjà ouvert.

Le distributeur selon l'invention est d'une fabrication simple et robuste et d'un encombrement réduit. Le tracé des canalisations à l'intérieur du corps 2 correspond sensiblement au tracé d'un distributeur classique, ce qui réduit les coûts de fabrication.

Il est clair que le distributeur de l'invention qui permet, comme montré sur le schéma de la figure 4, d'effectuer le pilotage d'une pompe à cylindrée variable, peut être également utilisé avec une pompe à cylindrée fixe; dans ce cas, comme montré sur la figure 5 il suffit de raccorder l'orifice 31a au dispositif de pilotage g du limiteur de pression L de la pompe $P_b$ à cylindrée fixe, afin de contrôler l'ouverture de la soupape dudit limiteur pour by-passer au réservoir l'excédene du débit de la pompe.

## Revendications

1. Distributeur hydraulique comprenant un corps (1) muni au moins d'un orifice (P) d'admission de fluide sous pression, d'un orifice (T) de retour du fluide vers un réservoir, de deux orifices de raccordement (A, B) à un appareil ou composant hydraulique, et un tiroir (3) réalisé en au moins deux parties (3a, 3b) assemblées l'une à l'autre et propre à coulisser dans un alésage (4) du corps (1) de distributeur, le corps et le tiroir comportant des passages, des canalisations et/ou des gorges agencés de manière à coopérer en vue d'établir les connexions ou les fermetures souhaitées des différents orifices (P, T, A, B) du corps de distributeur, selon la position occupée par le tiroir, ce distributeur comportant un verrouillage (V) du tiroir dans ses positions de travail et de repos et des moyens de déverrouillage (38, 39) actionnés mécaniquement lors du déplacement du tiroir, le distributeur comportant également des moyens (46, 49) sensibles à une pression propres à commander les moyens de déverrouillage (38, 39) lorsque ladite pression franchit une limite prédéterminée, caractérisé par le fait que, d'une part, un sélecteur de pression (S) est disposé à l'intérieur du tiroir, ce sélecteur de pression comprenant deux entrées (16, 17) et une sortie (19, 22) et étant propre à comparer les deux pressions sur ces entrées et à fournir, sur sa sortie, la pression la plus élevée, des moyens de liaison (14, 20; 61-65; 23) étant prévus dans le corps de distributeur et dans le tiroir (3) pour, lorsque le tiroir est dans sa position neutre, relier les deux entrées (16, 17) du sélecteur (S) à l'orifice de retour (T) vers le réservoir et pour, lorsque le tiroir est hors de sa position neutre, relier les deux entrées (16,17) du sélecteur respectivement et sélectivement aux deux orifices de raccordement (B, A) du distributeur, et pour relier la sortie (19, 22) du sélecteur à un canal (24) débouchant à l'extérieur du corps (1) de distributeur et que, d'autre part, les susdits moyens (46, 49) sensibles à une pression sont reliés à la sortie (19, 22) du sélecteur (S) et sont sensibles à la pression de sortie dudit sélecteur.

2. Distributeur selon la revendication 1, caractérisé par le fait que les moyens sensibles à la pression comprennent un piston (46) ou analogue logé dans une chambre (47) et propre à agir sur le déverrouillage sous l'effet de la pression de sortie du premier sélecteur, et un système de canalisations (57, 59, 60) propres à relier la sortie (19) du sélecteur à la chambre (47) où se trouve le piston.

3. Distributeur selon la revendication 2, caractérisé par le fait que le piston (46) est logé dans une chambre (47) dont la section est supérieure à la section d'un canal (52), fermé par une bille (51) poussée par le piston, pour l'admission de fluide sous pression dans la chambre (47).

4. Distributeur selon la revendication 3, caractérisé par le fait que le système de canalisations est réalisé à l'aide d'une pièce (53) emmanchée, notamment à force, dans un alésage (54) de la partie (3b) du tiroir comportant une chambre (19), cette pièce (53) comportant une tête élargie (55) située dans cette chambre (19), le siège (17) pour la bille (18) du sélecteur (8) étant prévu sur cette tête, le diamètre extérieur de ladite tête (55) étant inférieur au diamètre intérieur de la chambre (19) du sélecteur de telle sorte qu'un passage annulaire (56) soit formé entre la tête et la surface intérieure de la chambre.

5. Distributeur selon la revendication 4, caractérisé par le fait que le passage annulaire (56) est relié par un espace (57), prévu entre un prolongement de la pièce (53) et l'alésage (54) du tiroir dans lequel ce prolongement est engagé, à la chambre (47) dans laquelle se trouve le piston (46) de déverrouillage, le siège (17) prévu dans la tête élargie (55) de la pièce étant relié par des canalisations (61, 62, 63, 64) prévues dans cette pièce et sur sa surface externe, avec un canal radial (65) du tiroir (3) propre à être mis en communication avec un orifice de sortie (T) ou un orifice de raccordement (A) du distributeur.

6. Distributeur selon l'une quelconque des revendications précédentes, caractérisé par le fait que les deux parties (3a, 3b) du tiroir sont vissées l'une dans l'autre et bloquées, notamment par collage, pour subir, ensuite, un usinage de finition.

7. Distributeur selon l'une quelconque des revendications précédentes, comprenant un clapet d'étanchéité (67) prévu sur un orifice de sortie (B), clapet dont l'ouverture peut être commandée par le tiroir (3) lors de ses déplacements, caractérisé par le fait que ce tiroir comporte un passage transversal diamétral (71) communiquant avec un canal longitudinal (14) du tiroir, l'ensemble étant tel que, en position neutre du tiroir, ce passage diamétral (71) établisse une liaison de la chambre (7) du corps de distributeur, fermée par le clapet d'étanchéité (67), avec l'orifice (T) relié au réservoir, tandis que lors du déplacement du tiroir dans le sens destiné à provoquer l'ouverture du clapet d'étanchéité (67), le susdit passage diamétral (71) se trouve fermé au début du mouvement.

## Patentansprüche

1. Hydraulikverteiler mit einem Verteilergehäuse (1) mit wenigstens einer Zulauföffnung (P) für das unter Druck stehende fluide Medium, einer Rücklauföffnung (T), durch die das fluide Medium in ein Reservoir zurückläuft, zwei Verbindungsöffnungen (A, B) zu einem Hydraulikapparat oder -bestandteil und einem Schieber (3), der aus wenigstens zwei Abschnitten (3a, 3b) besteht, die miteinander verbunden gleitend in einer Bohrung (4) des Verteilergehäuses eingelagert sind, wobei das Verteilergehäuse und der Schieber Passagen, Kanäle und/oder Öffnungen aufweist, die derart angeordnet sind, daß sie zur Bildung von Verbindungen sowie den gewünschten Schließstellen zwischen den verschiedenen Öffnungen (P, T, A, B) des Verteilerkörpers entsprechend der Position, die der Schieber gerade einnimmt, zusammenwirken, sowie mit einer Verriegelungsvorrichtung (V) für den Schieber in seinen Arbeits- und Ruhestellungen sowie Entriegelungseinrichtungen (38, 38), die bei der Verschiebung des Schiebers mechanisch betätigt werden und mit Steuereinrichtungen (46, 49), die auf einen bestimmten Druck ansprechen, um die Entriegelungseinrichtungen anzusteuern, sobald dieser Druck eine bestimmte Größe· überschreitet, dadurch gekennzeichnet, daß einerseits ein Druckselektor (S) im Innern des Schiebers (3) angeordnet ist, der zwei Eingänge (16, 17) und einen Ausgang (19, 22) enthält und so ausgelegt ist, daß er die beiden Drucke an seinen Eingängen vergleicht und am Ausgang den höheren der beiden Drucke abgibt, daß Verbindungseinrichtungen (14, 20; 61 - 65; 23) im Verteilergehäuse und im Schieber (3) vorgesehen sind, um - wenn der Schieber in seiner neutralen Position sich befindet - die beiden Eingänge (16, 17) des Druckselektors (S) mit der Rücklaufleitung (T) zum Reservoir zu verbinden und um - wenn der Schieber sich außerhalb seiner neutralen Position befindet - die beiden Eingänge (16, 17) des Druckselektors selektiv mit den beiden Verbindungsöffnungen (B, A) des Verteilers zu verbinden und um den Ausgang (19, 22) des Druckselektors mit einem Kanal (24) zu verbinden, der im Verteilergehäuse (1) nach außen führt, und daß andererseits die genannten druckempfindlichen Steuereinrichtungen (46, 49) mit dem Ausgang (10 22) des Druckselektors (S) verbunden sind und auf den Ausgangsdruck ansprechen.

2. Hydraulikverteiler nach Anspruch 1, dadurch gekennzeichnet, daß die druckempfindlichen Steuereinrichtungen einen Kolben (46) od.dgl. umfassen der in einer Kammer (47) angeordnet ist und auf die Entriegelung unter Wirkung des Ausgangsdrucks des ersten Selektors anspricht und daß ein System von Kanälen (57, 59, 60) vorgesehen ist, um den Ausgang (19) des Selektors mit der Kammer (47) zu verbinden, inderder Kolben sich befindet.

3. Hydraulikverteiler nach Anspruch 2, dadurch gekennzeichnet, daß der Kolben (46) in einer Kammer (47) angeordnet ist, deren Querschnitt größer ist als der Querschnitt eines Kanals (52), der gegen eine Zufuhr von fluidem Medium unter Druck in die Kammer (47) durch eine vom Kolben (46) beaufschlagte Kugel (51) verschlossen ist.

4. Hydraulikverteiler nach Anspruch 3, dadurch gekennzeichnet, daß das Kanalisationssystem ein, insbesondere unter Kraftwirkung stehendes gestieltes Teil (53) in einer Bohrung (54) des Teils (3b) des Schiebers, welches die Kammer (19) enthält, umfaßt, wobei dieses Teil (53) einen in dieser Kammer (19) angeordneten verbreiterten Kopf (55) umfaßt, der mit einem Ventilsitz (17) für die Ventilkugel des Druckselektros (S) versehen ist, wobei der Außendurchmesser des Kopfes (55) kleiner ist als der Innendurchmesser der Kammer (19) des Druckselektors,derart, daß ein Ringdurchlaß (56) zwischen dem Kopf und der Innenfläche der Kammer besteht.

5. Hydraulikverteiler nach Anspruch 4, dadurch gekennzeichnet, daß der Ringdurchlaß (56) durch eine Ausnehmung (57), die zwischen einer Verlängerung des Teils (53) und der Bohrung (54) des Schiebers, in welcher diese Verlängerung eingreift, mit der Kammer (47) verbunden ist, in der sich der Entriegelungskolben (46) befindet, und daß der Ventilsitz (17) im verbreiterten Kopf (65) des Teils durch Kanäle (61, 62, 63, 64) in diesem Teil und auf seiner Außenfläche mit einem radialen Kanal (65) des Schiebers (3) verbunden ist, der geeignet ist mit einer Ausgangsöffnung (T) oder einer Verbindungsöffnung (A) des Verteilers verbunden zu sein.

6. Hydraulikverteiler nach einem der Ansprüche 1 bis 5, dadurch gekennzeichnet, daß die beiden Teile (3a und 3b) des Schiebers (3) ineinander verschraubt und - insbesondere durch Verkleben - blockiert sind, um anschließend eine maschinelle Bearbeitung auszuhalten.        -

7. Hydraulikverteiler nach einem der Ansprüche 1 bis 6 mit einem Dichtungs-Klappenventil (67) für eine Auslaßöffnung (B), dessen Öffnung durch die Verschiebungen des Schiebers (3) gesteuert werden kann, dadurch gekennzeichnet, daß der Schieber einen diametralen Quer-Durchlaß (71) enthält, der mit einem Längskanal (14) des Schiebers kommuniziert, wobei die Ausbildung so getroffen ist, daß in der Neutralstellung des Schiebers dieser diametrale Durchlaß (71) eine Verbindung der Kammer (7) des Verteilergehäuses (1), die durch das Dichtungs-Klappenventil (67) geschlossen ist, mit der Öffnung (T) die eine Verbindung zum Reservoir bildet, herstellt, während bei der Verschiebung des Schiebers in der Richtung, in der das Dichtungs-Klappenventil (67) öffnen soll, der genannte diametrale Durchlaß (71) am Anfang der Bewegung geschlossen ist.

**Claims**

1. A hydraulic distributor comprising a body (1) provided at least with one pressurised fluid inlet port (P), one port (T) for returning the fluid to a tank, two ports (A, B) for connection with a hydraulic apparatus or component, and a slide valve (3) and made of at least two parts (3a, 3b) assembled to one another and adapted to slide in a bore (4) of the distributor body (1), the body

0 082 048

and the slide valve including passages, channels and/or grooves arranged so as to cooperate to establish the desired connections or closures of the various ports (P, T, A, 8) of the distributor body, according to the position occupied by the slide valve, said distributor comprising locking means (V) for the slide valve in working and resting positions thereof, and unlocking means (38, 39) actuated mechanically on the movement of the slide valve, the distributor also comprising means (48, 49) sensitive to a pressure adapted to control the unlocking means (38, 39) when said pressure passes through a predetermined limit, characterized by the fact that, on the one hand, a pressure selector (S) is arranged inside the slide valve, said pressure selector comprising two inlets (18, 17) and one outlet (19, 22), and being adapted to compare the two pressures on said inlets and to supply, at its outlet, the highest pressure, coupling means (14, 28; 81-65; 23) being provided in the distributor body (1) and in the slide valve (3) to couple, when the slide valve is in its neutral position, the two inlets (A, 8) of the selector (S) to the part (T) for returning to the tank and to couple, when the slide valve is out of its neutral position, the two inlets (18, 17) of the selector respectively to the two connecting ports (8, A) of the distributor, and to connect the outlet (19, 22) of the selector to a channel (24), opening outside the distributor body (1) and by the fact that, on the other hand, said means (48, 49) sensitive to an outlet pressure are connected to the outlet (19, 22) of the selector (S) and are sensitive to the outlet pressure of said selector.

2. The distributor according to claim 1, characterized by the fact that the pressure sensitive means comprise a piston (48) or the like housed in a chamber (47) and adapted to act on the unlocking means under the effect of the outlet pressure from the first selector, and a channel system (57, 59, 8a) adapted to connect the outlet (19) from the selector to the chamber (47) where the piston is located.

3. The distributor according to claim 2, characterized by the fact that the piston (48) is housed in a chamber (47) whose cross-section is greater than the cross-section of a channel (52), closed by a ball (51) urged by the piston, for the introduction of pressurised fluid into the chamber (47).

4. The distributor according to claim 3, characterized by the fact that the channel system is formed by means of a part (53) ensleeved, particularly with force, in a bore (54) of the part (3b) of the slide valve comprising a chamber (19), said part (53) comprising a widened head (55) situated in said chamber (19), the seat (17) for the ball (18) of the selector (S) being a, provided on this head, the outer diameter of said head (55) being less than the inner diameter of the chamber (19) of the selector so that an annular passage (58) is formed between the head and the inner surface of the chamber.

5. The distributor according to claim 4, characterized by the fact that the annular passage (58) is connected by a space (57), provided between an extension of the part (53) and the bore (54) of the slide valve in which said extension is introduced, to the chamber (47) in which the unlocking piston (48) is located, the seat (17) provided in the widened head (55) of the part being connected by channel means (61, 62, 63, 64) provided in said part and on its outer surface, with a radial channel (85) of the slide valve (3) adapted to be placed in communication with an outlet port (T) or a connecting port (A) of the distributor.

6. The distributor according to anyone of the preceding claims, characterized by the fact that the two parts (3a, 3b) of the slide valve are screwed into one another and locked, particularly by adhesion, to undergo, then, a finishing machining.

7. The distributor according to anyone of the preceding claims, comprising a fluid-tight valve (87) provided on an outlet port (8), or which valve the opening is controllable by the slide valve (3) on its movements, characterized by the fact that said slide valve comprises a diametric transverse passage (71) communicating with a longitudinal channel (14) of the slide valve, the assembly being such that, in the neutral position of the slide valve, said diametric passage (71) establishes a connection from the chamber (7) of the distributor body, closed by the fluid-tight valve (87), with the port (T) connected to the reservoir, whilst on the movement of the slide valve in the direction intended to cause the opening of the fluid-tight valve (87), the above-said diametric passage (71) is closed at the beginning of the movement.

# Fig.1.

Fig.2.

0 082 048

Fig.3.

# Fig.4.

# Fig.5.